# NEW EUROPEAN PATENT SPECIFICATION

(11) **EP 0 280 933 B2**
(45) Date of publication and mention of the opposition decision: **06.08.1997**
(45) Mention of the grant of the patent: 01.06.1994
(21) Application number: 88101892.3
(22) Date of filing: 09.02.1988
(51) Int. Cl.: B07C 5/12

(54) **Bottle receiving means**
Flaschenaufnahmevorrichtung
Dispositif de réception de bouteilles

(30) Priority: 02.03.1987 FI 870904
(43) Date of publication of application: 07.09.1988
(73) Proprietor: HALTON OY, SF-47400 Kausala (FI)
(72) Inventor: Mattila, Timo, F-47400 Kausala (FI); Elf, Juha, F-47400 Kausala (FI)
(74) Representative: Grams, Klaus Dieter, Dipl.-Ing.

(56) References cited:
- EP-A- 089 821
- EP-A- 0 091 854
- DE-A- 2 837 112
- FI-C- 71 892
- US-A- 3 584 226
- US-A- 3 684 385
- US-A- 3 942 127
- US-A- 3 987 301
- US-A- 4 367 405
- US-A- 4 476 533

## Description

The present invention relates to a bottle receiving means according to the preamble of claim 1.

In prior art there is known a bottle receiving means based on the use of a laser beam, in which the shape of the bottle is examined with the aid of a laser beam reflected on the bottle with the aid of a rotating mirror. The information on the shape of the bottle is obtained with the aid of a detector consisting of optic fibres. Accepted bottles are identified in a processing unit to which the information on the respective bottle under examination is conducted in the form of electrical signals in order to compare the shape information of the bottle under examination with equivalent data of acceptable bottle shapes provided in a file. Information on accepted bottles is conducted to a recording unit which records the number of accepted bottles and, for instance, their type and/or possibly the amount of money to be refunded for the bottles on a voucher which may be debited by the check-out attendant.

Bottle receiving means are particularly well usable in the bottle returning departments of major foodstuff stores and department stores, and of stores selling beer.

This bottle receiving means of prior art is susceptible to malfunctions inasmuch as the laser is a sensitive component and the rotating mirror requires highly exact aligning. This makes the manufacturing of the bottle receiving means rather difficult and results in high price of the means. Furthermore, natural wear of the means causes need of servicing, on account of faultless operation of the parts of the means which require special exactitude.

According to the document FI-C-71892 there is disclosed a generic bottle receiving means comprising transport apparatus for transporting bottles, an identifying means for identifying and accepting bottles having given shapes, and a recording means for recording accepted bottles. The identifying means comprises a mainly stationary illuminating means for illuminating the bottle, a detector for examining the bottle and a conveyor for moving the bottle past the detector. The detector contains a lineal camera arranged to examine the bottle momentarily at lineal locations while the bottle moves past in front of the detector, moved by the conveyor, so that the lineal examined locations provide information at least on the shape of the bottle's neck and upper part. The detector consists mainly of photodiodes disposed in a row. The conveyor is disposed to transport the bottle through between the illuminating means and the detector so that the detector will examine the bottle from behind as referred to the illuminating means and will supply information on the shape of the bottle on the basis of the shadow thrown by the bottle.

This problem solution of prior art is based on examining the bottle that has been turned in, at discrete moments, at lineal locations while the bottle is moving past before the detector. Hereby, as the bottle moves, the lineal examining location will sweep over the entire bottle and a line image of the bottle is obtained over the entire body. To perform this examination, a lineal camera may be advantageously used, which is simple in its construction and advantageous as to its price. The line image, e.g. a signal sequence of electric pulses delivered by the lineal camera, is exceedingly appropriate for processing the image and shape of a bottle with a view to identifying acceptable bottle shapes and recording accepted bottles.

If desired, for instance in conjunction with said lineal camera, the bottle may be illuminated with any illuminating means or lamp known in the art. If desired, it is possible instead of a lineal camera to use e.g. photodiodes arranged in a row, in which case the bottle is appropriately illuminated from the opposite side e.g. with the aid of light-emitting diodes, for instance with infra-red LEDs arranged in a row. The examination may in that case be timed to take place at given time intervals as the bottle is moving past between the illuminating means and the light diodes in order to obtain a line image of the respective bottle under examination.

In the arrangement disclosed in the document FI-C-71892 the detector and receiver means are placed directly opposite each other The detector has the design of a lineal semiconductor camera comprising a camera element and optics. Since the camera and the illuminating means are opposed, the mechanical dimensions of the means impose certain requirements on the optics of the camera, that is, wide-angle optics are required. The consequence is that in this problem solution of prior art a powerful parallax error is incurred, in other words, even a minor displacement of the bottle on the line connecting the detector and the illuminating means causes a considerable error in the result of measurement gained from a bottle on the conveyor.

In the above-mentioned problem solution the position of the bottle on the conveyor has to be exactly correct, in which case the height is h₁. If the position of the bottle is incorrect, the height of the bottle will then be h₂. The positional error Δs of the bottle on the conveyor causes an error in height ${\text{Δh = h}}_{\text{2}} {\text{- h}}_{\text{1}}$. On the strength of the foregoing, the accuracy requirements of this measuring system of prior art are exceedingly high.

In the document US-A-4 367 405 (D2) there has been disclosed a bottle inspection apparatus for inspection of dirt and foreign bodies in bottles. This apparatus comprises an illumination means for illuminating the whole size of a bottle and a detector positioned above at the one side of the bottle to be inspected. Opposite to said illumination means and said detector there is provided a mirror system, by means of which two optical paths extending between the illumination means and the detector are so folded that over part of their lengths they are parallel and vertical, thus reducing the area, in plan, required to accommodate the necessary optical path lengths. By means of the optical paths the image of the bottle turns through 180° relative to the vertical axis during reflexion.

It is the object of the present invention to provide a bottle receiving means comprising an identifying means for identifying and accepting bottles having certain given shapes, wherein the accuracy of measurement of the identifying means is substantialy improved without increasing the structural dimensions of the means.

This object is achieved by bottle receiving means according to the preamble of claim 1 and having the features indicated in the characterizing part of claim 1. According to these features, the mirror system is interposed between the illumination means and the detector with its optical path in a horizontal direction and without increasing structural dimensions of the device, wherein the detector is disposed to examine at least a line image of the shape of the bottle's neck and upper part.

Thanks to the problem solution of the invention, even major positional errors Δs of the bottles on the conveyor cause no worthwhile error in height Δh, which approaches zero with increasing focal length.

Theoretically, the optical length may approach infinity if infinitely high manufacturing accuracy is reached.

The mirror system of the invention may consist of one, two, three or, if required, even more mirrors. The light travelling from the illuminating means to the detector is then reflected through one mirror to the detector, respectively through two mirrors to the detector, respectively through three mirrors to the detector, the first mirror being an auxiliary mirror and the second and third mirrors being principal mirrors, and respectively through four mirrors to the detector, in which case the first and fourth mirrors are auxiliary mirrors and the second and third mirrors are principal mirrors. In the design with three or four mirrors, or in a design in which an even greater number of mirrors is used, the mirrors are positioned in a specific manner, that is, they are placed and installed at an angle of reflection. It is essential that the angles between mirrors are set to conform to the principles and laws of the theory of optics and of reflection.

Preferable embodiments of the invention are defined in the claims 2 to 5.

In the following the invention is further illustrated by embodiments with reference to the enclosed figures
Fig. 1 presents, by way of a principle block diagram, the design and operation of a bottle receiving means.
Fig. 2 presents in elevational view the principle construction of the identifying means belonging to the receiver means of Fig. 1, in elevational view.
Fig. 3 presents the same means as Fig. 2, viewed from above.
Fig. 4 illustrates the forming of a line image of the bottle under examination, with an identifying means as shown in Figs 2-3.
Fig. 5 presents the identifying means of another embodiment of the bottle receiving means, in elevational view.
Fig. 6 presents a mirror system interposed between the illuminating means and the detector, in a bottle receiving means.
Fig. 7 presents another mirror system interposed between the illuminating means and the detector, in a bottle receiving means.
Fig. 8 presents a third mirror system interposed between the illuminating means and the detector, in a bottle receiving means.
Fig. 9 presents a fourth mirror system interposed between the illuminating means and the detector, in a bottle receiving means.

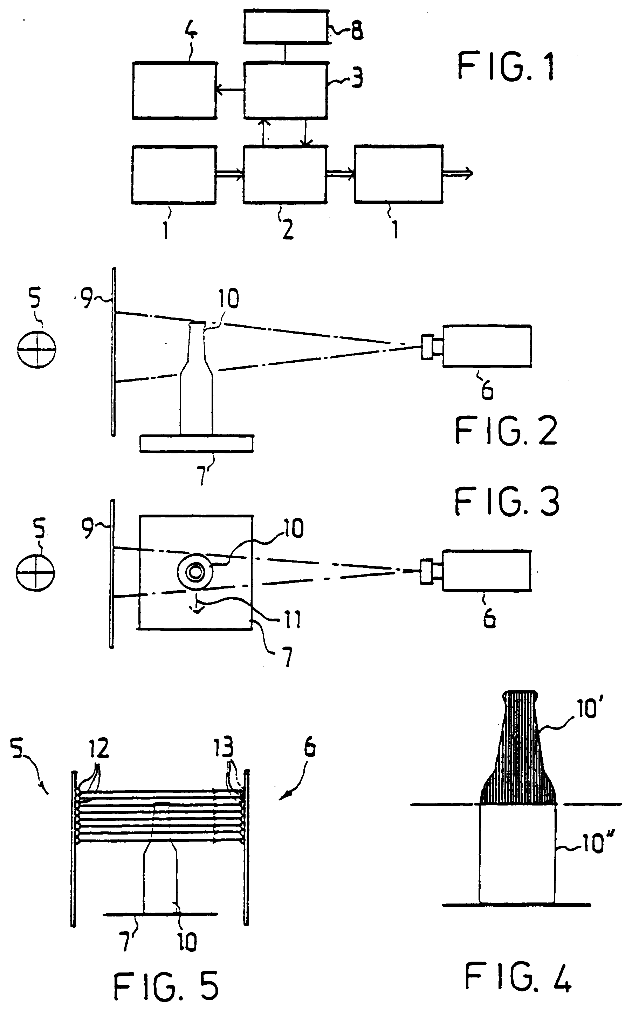

The application of a bottle receiving means conforming to an embodiment of the invention, presented by way of example in Fig. 1, comprises a transport means or a transport apparatus 1 for transporting bottles, an identifying means 2 with data processing unit 3 for identifying and accepting bottles having given shapes, and a recording means 4 for recording the accepted bottles. The transport means 1 may consist e.g. of one or several belt conveyors, of a rotary disk conveyor, or in general of any kind of conveyor suitable for transporting bottles. The conveyor may be disposed to transport bottles in horizontal direction and/or possibly in vertical direction; however, horizontal transport is considered most appropriate in connection with a bottle receiving means according to the invention. The transport apparatus may further comprise a feeder means for feeding bottles to the transport means, and a removal means for removing the bottles at the end of the transport means, e.g. onto the floor of a storage space, into a bottle hamper, etc.

The identifying means 2 comprises, advantageously, a data processing unit 3 with memory unit 8 and recording unit 4, if any. The data processing unit 3 is thus provided with a file specifying acceptable bottle shapes, that is, the data of acceptable bottle shapes may be entered in the file for comparison of the information obtained from bottles with the equivalent information on acceptable bottle shapes. The recording means records the number of accepted bottles, possibly their sizes and/or the amount of money to be debited or refunded.

Figs 2-3 show, in a schematic principle diagram, an identifying means 2, comprising a mainly stationary illuminating means 5 for illuminating the bottle 10, a detector 6 for examining the bottle, and a conveyor 7 for moving the bottle past the detector. Said detector has been disposed to examine the bottle at discrete moments, at time intervals, at lineal locations, as the bottle moves, transported by the conveyor 7, past the detector in such manner that the lineal examined locations yield information at least on the shape of the bottle's neck and upper part, that is, the detector has been disposed to register a so-called line image of the bottle.

When registering said line image, the detector is thus understood to register, at intervals, line images of the bottle, as shown in Fig. 4, while the bottle is moved past the detector by the conveyor 7. Such line images may be taken at desired time intervals, that is, the line spacing of the image can be regulated to be as desired, according to the desired accuracy of information. The detector 6 converts the line image received into electric pulses, to be conducted to a data processing unit as shown in Fig. 1, in a manner known in the art.

It is not absolutely necessary to register a line image of the whole bottle; it is usually sufficient to project the image of the upper part 10' of the bottle, as shown in Fig. 4, since the specific characteristics of different bottle types and models are usually best apparent in the upper part of the bottle. The lower part 10'' of the bottle is then appropriately excluded from the image process.

In Figs 2-3 a conventional lineal camera has been used for detector 6, this camera being arranged to produce an image of the bottle moving past in front of the camera in lateral direction at right angles against the alignment of the camera objective, in the region of the upper part of the bottle's neck, in the form of vertical line images at 1 mm spacing. The identifying means has been programmed to measure the height of the bottle. If desired, the detector 6 may be arranged to produce horizontal images of the bottle, in which case the conveyor 7 is appropriately disposed to transport the bottle in vertical direction for viewing the bottle at desired height.

By using a lineal camera for detector 6, certain advantages are gained, compared for instance with an identifying means based on laser. In the first place, a lineal camera is substantially less expensive than a laser. The lineal camera usually requires far less maintenance than any laser apparatus. The lineal camera is reliable in operation and construction, tolerating vibration and other external stresses. The lineal camera may for instance consist of a so-called CCD (Charge Coupled Diode) camera or, for instance, of a so-called photodiode camera (Self Scanning Array). A lineal camera may further with ease be connected to a data processing unit, and the information delivered by the lineal camera, i.e., an electric signal sequence, is eminently suited to be used substantially as it is in a data processing unit. Furthermore, the lineal camera can be adjusted and timed with ease regarding the scanning rate, that is, the image-recording interval.

In Fig. 5 is seen another embodiment, in which the bottle under examination has been conducted to pass, on a conveyor, through a gate constituted by a row of diodes 12 emitting IR light and a vertical row formed by light-receiving photodiodes 13. The IR-light-emitting diodes and the corresponding light-measuring photodiodes then constitute an identifying means in which the diodes have been arranged to measure the height of the bottle at time intervals, that is, to record vertical line images of the bottle. The timing of the photodiodes is used to regulate the line spacing of the line image, i.e., the resolution of the image.

In the embodiments here presented, the bottle under examination has been disposed to be transported in upright position. If desired, the transport apparatus 1 and/or the conveyor 7 may be arranged to move the bottle relative to the detector in horizontal position as well, that is, with the mouth of the bottle pointing in horizontal direction. Furthermore, in the embodiments that have been presented the detector 6, i.e., the lineal camera, respectively the row of photodiodes 13, has been disposed to be stationary. Alternatively, the lineal cameras, or said photodiodes, may equally be disposed to scan the bottle for recording an image of the bottle, although this last-mentioned design is more complex and consequently more expensive.

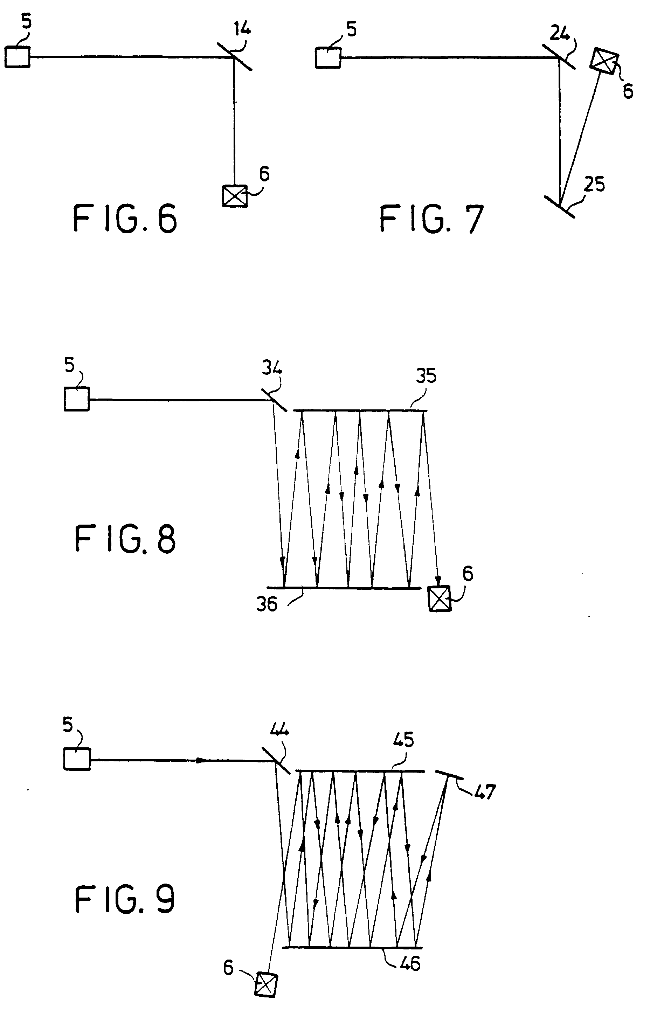

In the embodiment of Fig. 6 a mirror system has been interposed between the illuminating means 5 and the detector 6, said mirror system consisting of one mirror 14 in this embodiment.

In the embodiment of Fig. 7 a mirror system has been interposed between the illuminating means 5 and the detector 6, said mirror system consisting of a first mirror 24 and a second mirror 25 in this embodiment.

In the embodiment of Fig. 8 a mirror system has been interposed between the illuminating means 5 and the detector 6, this mirror system consisting in this embodiment of a first mirror 34, a second mirror 35 and a third mirror 36. The first mirror 34 is an auxiliary mirror, and the second and third mirrors 35, 36 are principal mirrors. The mirrors 34, 35 and 36 have been positioned in a specific way so that the desired angle of reflection is obtained.

In the embodiment of Fig. 9 a mirror system has been interposed between the illuminating means 5 and the detector 6, this mirror system consisting of four mirrors 44, 45, 46 and 47. The mirrors 44 and 47 are auxiliary mirrors, and the mirrors 45 and 46 are principal mirrors. The mirrors 44-47 have been positioned in a specific way so that the desired angle of reflection is obtained.

## Claims

1. A bottle receiving means comprising a transport apparatus (1) for transporting bottles, an identifying means (2) with data processing unit (3) for identifying and accepting bottles having certain given shapes, and a recording means (4) for recording accepted bottles, said identifying means (2) comprising a stationary lineal illuminating means (5) for illuminating said bottle, a detector (6) for examining said bottle, and a conveyor (7) for moving said bottle between said illuminating means (5) and said detector so that the detector examines a line image of the shape of at least the bottle's neck and upper part (10') from behind the bottle as referred to the illuminating means,
**characterized in that** between said conveyor (7) and said detector (6) there is interposed a stationary mirror system (14;24;25;34;35;36;44,45,46,47) without increasing the structural dimensions of said identifying means (2), whereby even major positional errors of the bottles on said conveyor (7) cause no worthwhile error in height, which approaches zero with increasing focal length, by the aid of which mirror system the optical path in a horizontal direction between the bottle and said detector (6) is folded for increasing the optical length of said mirror system.

2. A bottle receiving means according to claim 1,
**characterized in that** said mirror system consists of one mirror (14).

3. A bottle receiving means according to claim 1,
**characterized in that** said mirror system consists of two mirrors (24, 25).

4. A bottle receiving means according to claim 1,
**characterized in that** said mirror system consists of three mirrors (34, 35, 36), the first mirror (34) being an auxiliary mirror and the second and third (35, 36) being principal mirrors.

5. A bottle receiving means according to claim 1,
**characterized in that** said mirror system consists of four mirrors (44, 45, 46, 47), the first mirror (44) and the fourth mirror (47) being auxiliary mirrors and the second mirror and the third mirror (45, 46) being principal mirrors.

## Patentansprüche

1. Flaschenaufnahmevorrichtung, mit einer Förderanlage (1) für die Flaschenförderung, einer Identifikationseinrichtung (2) mit einer datenverarbeitenden Einheit (3) zum Identifizieren und Annehmen von Flaschen mit bestimmten gegebenen Formen, und einer Registriereinrichtung (4) zum Registrieren angenommener Flaschen, wobei die Identifikationseinrichtung (2) folgendes aufweist: eine ortsfeste Linien-Beleuchtungseinrichtung (5) für die Beleuchtung der Flasche, einen Detektor (6) zur Untersuchung der Flasche und eine Förderanlage (7) zum Bewegen der Flasche zwischen der Beleuchtungseinrichtung (5) und dem Detektor, so daß ein Linienbild der Form zumindest des Flaschenhalses und des oberen Flaschenteils (10') vom Detektor, in bezug auf die Beleuchtungseinrichtung hinter der Flasche, untersucht wird,
**dadurch gekennzeichnet**, **daß**
zwischen der Förderanlage (7) und dem Detektor (6) ein ortsfestes Spiegelsystem (14; 24; 25; 34; 35; 36; 44, 45, 46, 47) angeordnet ist, ohne damit die strukturellen Ausmaße der Identifikationseinrichtung (2) zu erhöhen, wodurch sogar große Positionierfehler der Flaschen auf der Förderanlage keine nennenswerten Höhenfehler hervorrufen, welche Höhenfehler mit Erhöhung der Brennweite gegen Null gehen, wobei mit Hilfe des Spiegelsystems der Lichtweg in horizontaler Richtung zwischen der Flasche und dem Detektor (6) gefaltet wird, um die Brennweite des Spiegelsystems zu erhöhen.

2. Flaschenaufnahmevorrichtung nach Anspruch 1, **dadurch gekennzeichnet, daß** das Spiegelsystem aus einem Spiegel (14) besteht.

3. Flaschenaufnahmevorrichtung nach Anspruch 1, **dadurch gekennzeichnet, daß** das Spiegelsystem aus zwei Spiegeln (24, 25) besteht.

4. Flaschenaufnahmevorrichtung nach Anspruch 1, **dadurch gekennzeichnet, daß** das Spiegelsystem aus drei Spiegeln (34, 35, 36) besteht, wobei der erste Spiegel (34) ein Zusatzspiegel ist und der zweite und dritte Spiegel (35, 36) Hauptspiegel sind.

5. Flaschenaufnahmevorrichtung nach Anspruch 1, **dadurch gekennzeichnet, daß** das Spiegelsystem aus vier Spiegeln (44, 45, 46, 47) besteht, wobei der erste Spiegel (44) und der vierte Spiegel (47) Zusatzspiegel sind und der zweite Spiegel und der dritte Spiegel (45, 46) Hauptspiegel sind.

## Revendications

1. Dispositif de réception de bouteilles comprenant un appareil transporteur (1) pour transporter les bouteilles, des moyens d'identification (2) avec une unité de traitement de données (3) pour identifier et accepter les bouteilles présentant certaines formes données, et des moyens d'enregistrement (4) pour enregistrer les bouteilles acceptées, lesdits moyens d'identification (2) comprenant principalement des moyens d'éclairage linéaires stationnaires (5) pour éclairer ladite bouteille, un détecteur (6) pour examiner ladite bouteille, et un convoyeur (7) pour faire passer ladite bouteille entre lesdits moyens d'éclairage (5) et ledit détecteur, de sorte que le détecteur examine une image de lignes de la forme d'au moins le col de la bouteille et la partie supérieure (10') de l'arrière de la bouteille par rapport aux moyens d'éclairage,
caractérisé en ce qu'entre ledit convoyeur (7) et ledit détecteur (6) est interposé un système à miroirs stationnaire (14 ; 24 ; 25 ; 34 ; 35 ; 36 ; 44 ; 45 ; 46 ; 47) sans augmenter les dimensions structurelles desdits moyens d'identification (2), de telle sorte que même des erreurs de position importantes des bouteilles sur ledit convoyeur (7) n'entraînent aucune erreur importante de hauteur, qui se rapproche de zéro sans augmenter la longueur focale, à l'aide duquel système à miroirs, la voie optique dans une direction horizontale entre la bouteille et ledit détecteur (6) est pliée pour augmenter la longueur optique dudit système à miroirs.

2. Dispositif de réception de bouteilles selon la revendication 1, caractérisé en ce que ledit système à miroir consiste en un miroir (14).

3. Dispositif de réception de bouteilles selon la revendication 1, caractérisé en ce que ledit système à miroirs consiste en deux miroirs (24, 25).

4. Dispositif de réception de bouteilles selon la revendication 1, caractérisé en ce que ledit système à miroirs consiste en trois miroirs (34, 35, 36), le premier miroir (34) étant un miroir auxiliaire et les second et troisième miroirs (35, 36) étant des miroirs principaux.

5. Dispositif de réception de bouteilles selon la revendication 1, caractérisé en ce que ledit système à miroirs consiste en quatre miroirs (44, 45, 46, 47), le premier miroir (44) et le quatrième miroir (47) étant des miroirs auxiliaires et le second miroir et le troisième miroir (45, 46) étant des miroirs principaux.
